# FASCICULE DE BREVET EUROPEEN

(11) **EP 3 870 842 B1**
(45) Date de publication et mention de la délivrance du brevet: **31.01.2024**
(21) Numéro de dépôt: 19816769.4
(22) Date de dépôt: 12.12.2019
(51) Int. Cl.: F03D 3/00, F03D 3/04

(54) **TURBINE AERAULIQUE A FLUX TRAVERSANT**
WINDTURBINE MIT DURCHFLUSS
AERAULIC TURBINE WITH THROUGH-FLOW

(30) Priorité: 12.12.2018 BE 201805883
(43) Date de publication de la demande: 01.09.2021
(73) Titulaire: Sonaca S.A., 6041 Gosselies (BE)
(72) Inventeur: SCHULER, Claude, 1420 BRAINE L'ALLEUD (BE); VIDAIC, Jonas, 7070 MIGNAULT (BE); RENARD, Yves, 1470 GENAPPE (BE); VALCKE, André-Marie, 4130 ESNEUX (BE)
(74) Mandataire: Brevalex
(86) Numéro de dépôt international: PCT/EP2019/084897
(87) Numéro de publication internationale: WO 2020/120678

(56) Documents cités:
- WO-A1-2006/039727
- DE-A1- 2 444 803
- DE-A1- 2 535 297
- DE-U1-202008 010 396
- JP-A- S 521 251
- US-A- 264 164
- US-A1- 2005 201 855
- US-B1- 8 591 170

## Description

### DOMAINE TECHNIQUE

La présente invention se rapporte au domaine des aérogénérateurs qui exploitent l'énergie cinétique du vent pour la transformer en énergie électrique, et plus particulièrement à une turbine aéraulique.

### ÉTAT DE LA TECHNIQUE ANTÉRIEURE

Il existe un grand nombre de dispositifs permettant de capter l'énergie cinétique du vent pour la transformer en énergie mécanique, mais les constructeurs ont fini par adopter majoritairement la turbine avec rotor à axe horizontal pourvu de trois pales pour équiper les éoliennes destinées à la production d'électricité à grande échelle. Cette prédominance s'explique du fait que ce type de turbine possède intrinsèquement le meilleur rendement de fonctionnement, aussi appelé coefficient de puissance.

Ce type de turbine, descendant direct des moulins à vent, a largement profité des avancées dans le domaine aéronautique pour atteindre une maturité technique certaine et des prix de production raisonnables, en remplaçant ses pales initialement faites de voiles, par des éléments ressemblant à des ailes d'avions.

On retrouve exclusivement les éoliennes pourvues de ces turbines à rotor tripale à axe horizontal montées sur mat en milieu rural ou au large marin, caractérisé par des vents dominants stables, car les villes sont des zones marquées par des obstacles et couloirs de vents qui induisent des turbulences et des rafales pénalisant leur fiabilité et réduisant leur efficacité.

Cependant, l'implantation de ces éoliennes loin des villes consommatrices d'électricité nécessite dès lors son acheminement, source de pertes énergétiques et de création de réseaux denses et coûteux. Une application des turbine tripales dans le domaine urbain impliquerait alors de les placer sur des mats s'élevant à des hauteurs bien supérieures à la taille des bâtiments, mais cela constituerait un risque pour la population, en plus des nuisances sonores et visuelles qu'elles entraîneraient.

Récemment il a été proposé de petites éoliennes pour un usage urbain fixées en toiture, et dont le rendement de la turbine est moins sensible aux variations des vitesses de vent. A cet égard il n'y a donc pas besoin de les placer aussi haut que les éoliennes industrielles tripales à axe horizontal. Il existe principalement deux types de configurations de turbine destinées aux éoliennes de toiture :
- la turbine dite « de Savonius » dont le fonctionnement est basé sur la traînée différentielle, comprenant un rotor avec deux demi-cylindres légèrement désaxés, ou
- la turbine à rotor de type « roue à aube » qui reprend le principe de fonctionnement du moulin au fil de l'eau.

Cependant, même si ces machines sont plus adaptées à l'ambiance urbaine, elles présentent généralement un rendement de fonctionnement qui est significativement inférieur à celui des turbines à rotor tripales à axe horizontal, rendant le retour sur investissement incertain au vu des coûts d'installation et de maintenance induits.

Le but de l'invention est de remédier à cet inconvénient en proposant une turbine dont le fonctionnement permet de restituer assez d'énergie pour justifier son intégration dans le paysage urbain. Un exemple de l'art antérieur est divulgué dans US2005/201855A1.

### EXPOSÉ DE L'INVENTION

A cet effet, l'invention a pour objet une turbine aéraulique à flux traversant, selon la revendication 1.

Avec cette solution, le rotor est alimenté par une quantité de vent au niveau d'un secteur dont une exposition frontale serait contreproductive. Il s'ensuit un meilleur rendement de fonctionnement via une augmentation du débit d'air rencontrant le rotor 2. En particulier, l'écope est peu génératrice de perte de charge du fait de sa morphologie, celle-ci s'étendant d'amont en aval vers le rotor 2.

L'invention se rapporte également à une turbine aéraulique ainsi définie, dans laquelle :
- l'écope est délimitée par la première paroi déflectrice et une deuxième paroi déflectrice qui s'étend en aval de la première paroi déflectrice en s'écartant de la paroi support d'amont en aval depuis une extrémité amont jusqu'à une extrémité aval situé en périphérie du rotor ;
- le canal d'amplification convergeant est délimité par une embase, montée rigidement au bâti ou fixée sur la paroi support, et par une paroi de fermeture qui prolonge vers l'aval l'extrémité amont de la deuxième paroi déflectrice,
   dans laquelle l'embase s'étend à distance de la paroi de fermeture en formant un bossage dirigé vers cette paroi de fermeture.

L'invention se rapporte également à une turbine aéraulique ainsi définie, dans laquelle :
- la bordure amont de la paroi de concentrateur et l'extrémité amont de première paroi déflectrice délimitent conjointement en amont de la turbine un champ d'admission primaire qui s'étend longitudinalement dans l'alignement de la voie de propagation primaire ;
- l'extrémité amont de la première paroi déflectrice et la paroi support délimitent conjointement en amont de la turbine un champ d'admission secondaire qui s'étend longitudinalement dans l'alignement de la voie de propagation secondaire ;
- une paroi de déviation, de la pluralité de paroi de guidage, chevauche les champs d'admission primaire et secondaire en s'étendant d'amont en aval en se rapprochant de la paroi support, de manière à être apte à prélever un flux de déviation du vent circulant dans le champ d'admission primaire et le guider vers la voie de propagation secondaire, le flux primaire correspondant à la quantité de vent s'étendant dans le champ d'admission primaire qui est ôtée du flux de déviation qui longe la paroi de déviation, tandis que le flux secondaire correspond à la quantité de vent s'étendant dans le champ d'admission secondaire enrichie du flux de déviation.

L'invention se rapporte également à une turbine aéraulique ainsi définie, comprenant une paroi de séparation, de la pluralité de paroi de guidage, qui s'étend le long de l'écope, entre les première et deuxième parois déflectrices, pour délimiter un premier passage et un second passage d'écope prévus chacun pour guider une partie respective du flux auxiliaire vers la partie concave des pales au niveau du secteur d'admission auxiliaire de rotor, le premier passage étant délimité par la première paroi déflectrice et la paroi de séparation, et le second passage étant délimité par cette paroi de séparation et la deuxième paroi déflectrice.

L'invention se rapporte également à une turbine aéraulique ainsi définie, dans laquelle :
- la paroi de séparation dépasse de l'écope au sein de la voie de propagation secondaire en traversant l'ouverture de prélèvement ;
- la paroi de déviation s'étend au sein de la voie de propagation secondaire entre la première paroi déflectrice et la paroi de séparation de sorte à ce que le flux de déviation soit guidé vers le premier canal d'écope pour enrichir la partie correspondante du flux auxiliaire.

L'invention se rapporte également à une turbine aéraulique ainsi définie, comprenant une paroi de répartition, de la pluralité de parois de guidage, qui s'étend d'amont en aval au sein de la voie de propagation primaire en se rapprochant de la paroi de concentrateur pour scinder le flux primaire en deux jets orientés chacun vers la partie concave des pales du rotor au niveau du secteur d'admission primaire.

L'invention se rapporte également à une turbine aéraulique ainsi définie, dans laquelle les pales sont des lames minces présentant une structure identique en forme de portion de surface cylindrique, au nombre de quatorze à vingt-six, et de préférence au nombre de vingt.

L'invention se rapporte également à une turbine aéraulique ainsi définie, dans laquelle chaque pale présente un rayon de courbure d'une valeur comprise entre 0,05 à 0,3 fois le diamètre du rotor, et de préférence égale à 0,146 fois le diamètre du rotor.

L'invention se rapporte également à une turbine aéraulique ainsi définie, comprenant un organe de stator logé intégralement dans le rotor et monté mobile sur le bâti pour être déplaçable entre une position ouverte dans laquelle il autorise un passage du flux d'air au travers du rotor et une position fermée dans laquelle il condamne le passage de l'air au travers du rotor.

L'invention se rapporte également à une turbine aéraulique ainsi définie, dans laquelle l'organe de stator comprend deux modules de guidage diamétralement en vis-à-vis l'un de l'autre par rapport à l'axe de rotation du rotor, chaque module de guidage étant délimité par une surface de guidage externe et une surface de guidage interne, avec
chaque surface de guidage externe étant orientée vers l'extérieur du rotor et dont une de ses surfaces de guidage externe s'étend dans le prolongement du secteur d'admission primaire dans la position fermé d'organe de stator, et
les surfaces de guidages interne des deux modules délimitant conjointement un couloir au sein du rotor, ce couloir s'étendant dans le prolongement du secteur d'admission primaire dans la position ouverte d'organe de stator.

L'invention se rapporte également à un aérogénérateur d'électricité comprenant une turbine aéraulique ainsi définie, et un convertisseur de couple de rotation du rotor en énergie électrique.

### BRÈVE DESCRIPTION DES DESSINS

- La figure 1 est une vue en perspective d'une turbine selon un premier mode de réalisation de l'invention ;
- La figure 2 est une vue suivant un plan de coupe transversal d'une turbine selon le premier mode de réalisation de l'invention ;
- La figure 3 est une en perspective d'une turbine selon l'invention comprenant un organe de guidage d'air selon l'invention ;
- La figure 4 est une vue suivant un plan de coupe transversal d'une turbine selon le premier mode de réalisation comprenant un organe de guidage d'air dans un état ouvert selon l'invention ;
- La figure 5 est une vue suivant un plan de coupe transversal d'une turbine selon le premier mode de réalisation comprenant un organe de guidage d'air dans un état fermé selon l'invention ;
- La figure 6 est une vue suivant un plan de coupe transversal d'une turbine selon un deuxième mode de réalisation de l'invention.

### EXPOSÉ DÉTAILLÉ DE MODES DE RÉALISATION PARTICULIERS

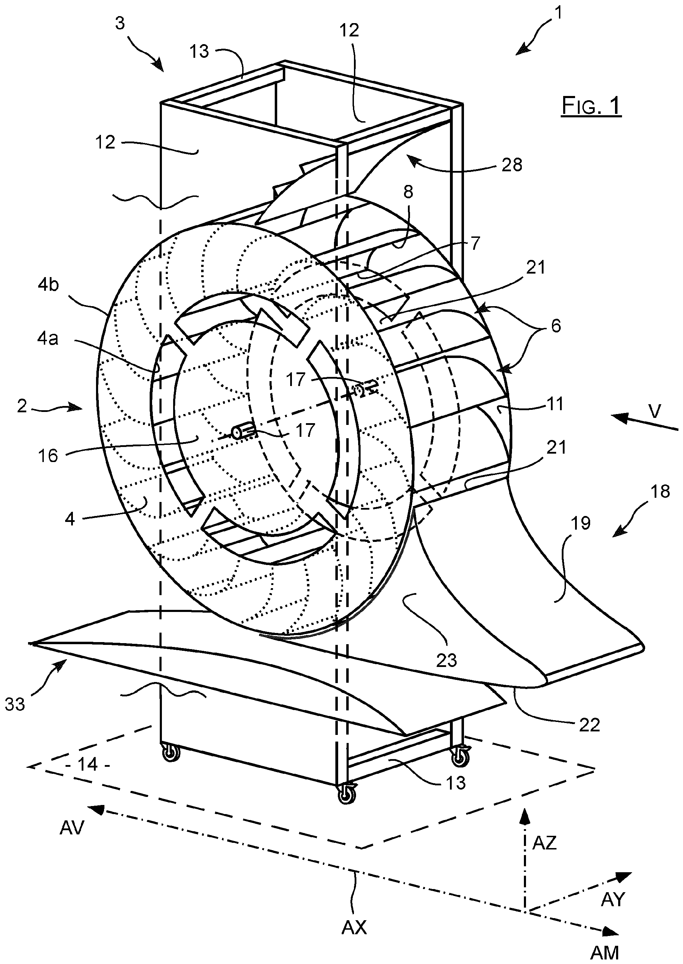

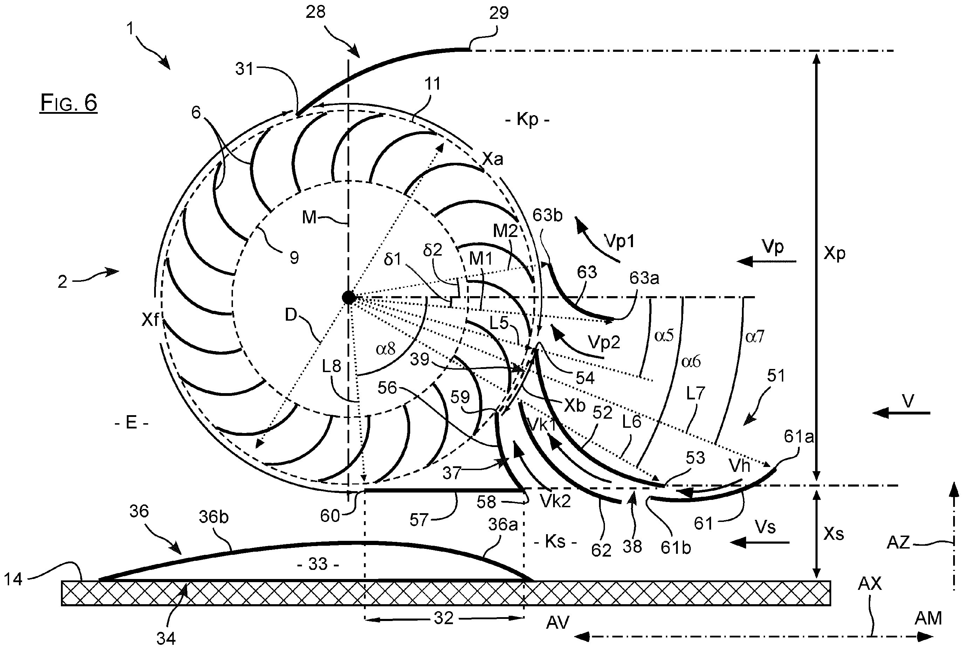

Dans la suite, il sera décrit une turbine selon un premier mode de réalisation de l'invention en références aux figures 1 à 5 annexées, et une turbine selon un deuxième mode de réalisation en référence à la figure 6.

La turbine, repérée par 1 sur la figure 1, inclut un rotor 2 monté en rotation sur un bâti 3. Le rotor 2 tourne autour d'un axe transversal AY s'étendant perpendiculairement à une direction dite longitudinale AX, prévue pour coïncider avec une direction globale de vent, représentée par la flèche V, s'étendant longitudinalement d'amont AM en aval AV vers la turbine 1.

Le rotor 2 présente une structure générale de « cage d'écureuil » en comprenant deux flasques transversaux 4 en forme de disque ou de couronne comme dans l'exemple de la figure 1. Les flasques transversaux 4 sont délimités chacun par un cercle extérieur 4b, et dans le cas d'une forme de couronne par un cercle intérieur 4a. Ils sont agencés transversalement en vis-à-vis l'un de l'autre en étant liés ensemble par des pales 6. Les pales 6, au nombre de quatorze à vingt-six et de préférence vingt, sont incurvées et régulièrement espacées circonférentiellement. Ces pales 6 sont ici des lames minces présentant une structure identique en forme de portion de surface cylindrique. Celles-ci s'étendent suivant la direction transversale AY, avec leurs extrémités opposées formant des zones d'attache aux flasques transversaux 4, par liaison de type encastrement. Chaque pale 6 comporte une surface convexe et une surface concave en présentant selon un plan de coupe normal à la direction transversale AY un profil arqué qui s'étend depuis un bord intérieur 7 et un bord extérieur 8.

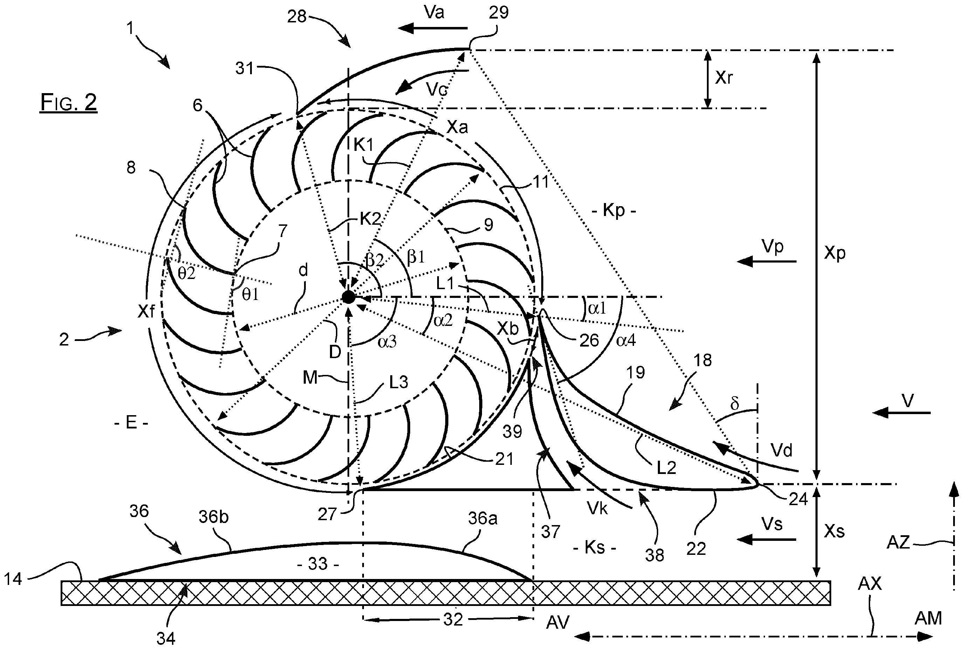

Comme visible en détail sur la figure 2, l'ensemble des bords intérieurs 7 de pale reliés successivement délimitent un contour circulaire d'enceinte interne 9 du rotor, et l'ensemble des bords extérieurs 8 reliés successivement délimitent un contour circulaire périphérique 11 du rotor. Préférentiellement, les projetées suivant AY des bords intérieurs et extérieurs de pale 7 et 8 coïncident respectivement avec le cercle intérieur et le cercle extérieur des flasques transversaux 4. Autrement dit, les flasques 4 et les pales 6 sont dimensionnés afin que les bords intérieurs 7 de pale soient situés sur le cercle intérieur 4a de flasque, et de la même manière afin que les bords extérieurs 8 soient situés sur le cercle extérieur 4b de flasque.

Les pales ont été décrites comme des lames minces d'épaisseur constante, mais des pales à profil d'aile aérodynamique, autrement dit d'épaisseur évolutive, ou d'autres profils sont également envisageables.

Le bâti 3 se présente sous la forme de deux panneaux 12 disposés orthogonalement à la direction transversale AY en étant rattachés rigidement l'un à l'autre par une armature 13. Ces panneaux 12 présentent une composante suivant la direction longitudinale et une composante suivant une direction dite d'envergure notée AZ, perpendiculaire à la fois à la direction longitudinale AX et à la direction transversale AY. Les panneaux 12 s'étendent de part et d'autre du rotor 2, chacun en regard d'un flasque 4, pour supporter en rotation le rotor 2. Chaque flasque 4 est lié en rotation à un disque 16 s'étendant globalement dans le même plan et au niveau duquel dépasse transversalement un demi-moyeu 17. Chaque demi-moyeu 17 est centré sur l'axe de rotation du rotor et traverse le panneau 12 en vis-à-vis.

La turbine 1 est notamment destinée à être installée sur une paroi support 14, par exemple un toit plat ou encore une paroi verticale de bâtiment, avec la direction d'envergure AZ orientée normale à la paroi support et l'axe du rotor parallèle à la paroi support. Il est compris ici que le rotor de la turbine 1 peut être orienté horizontalement ou verticalement par rapport au sol, selon la configuration choisie.

Dans l'exemple de la figure 1, la turbine est montée sur des roulettes prévues au niveau d'extrémités de panneaux 12, pour simplifier son installation et changer aisément son orientation longitudinale pour correspondre à celle du vent. Les roulettes pourraient être remplacées par un pivot d'axe selon AZ, associé à une dérive portée par le bâti pour que la turbine 1 s'aligne d'elle même avec le vent d'orientation V.

Avec cet arrangement de rotor 2 en cage d'écureuil et tournant autour d'un axe perpendiculaire à la direction du vent, la turbine 1 selon l'invention fonctionne « à flux traversant ». Ce régime, sur lequel se base notamment un type de turbine hydraulique communément appelée « turbine Banki », couvre un large spectre de débits, ce qui rend son application au domaine de l'aéraulique urbain, marqué par des changements momentanés de vitesse de vent, particulièrement intéressant.

Dans le cadre de l'invention, ce régime emporte un premier et un second passage du vent à travers les pales 6 du rotor 2. Lorsque le vent, se propageant vers la turbine depuis l'amont AM, rencontre la partie concave des pales 6 qui sont directement exposées, celui-ci les pousse en entraînant en rotation le rotor 2. Dans l'exemple des figures, le sens de rotation du rotor est fixé dans le sens antihoraire. Lors du premier passage, le vent glisse le long du profil arqué des pales qu'il pousse, depuis le bord extérieur 8 jusqu'au bord intérieur 7 jusqu'à s'engouffrer dans l'enceinte interne du rotor. A ce stade, l'air, chargé encore en énergie cinétique, attaque une nouvelle fois les pales 6 d'amont AM en aval AV, depuis l'enceinte intérieure vers l'extérieur du rotor 2, pour exercer une poussée additionnelle. Durant ce second passage, l'air glisse sur les pales 6 depuis leur bord intérieur 7 vers leur bord extérieur 8.

Il est à noter que le montage du rotor 2 sur le bâti par des demi-moyeux 17 s'étendant chacun à l'extérieur de l'enceinte interne de rotor apporte un gain en performances en comparaison avec l'utilisation d'un moyeu continu qui constituerait une source de perturbation du flux d'air traversant l'enceinte interne.

Chaque pale 6 est dimensionnée pour présenter un rayon de courbure d'une valeur de 0,05 à 0,3 fois le diamètre du contour périphérique 11, noté D sur la figure 2. De préférence, le rayon de courbure des pales présente une valeur correspondant à 0,146 fois ce diamètre D. Complémentairement, l'étendue de chaque pale est définie pour que le contour d'enceinte interne 9 de rotor présente un diamètre, noté d, compris entre 0,5 et 0,9 fois le diamètre D du contour périphérique 11, et valant préférentiellement deux tiers de ce diamètre D. Aussi, chaque pale 6 est orientée avantageusement pour que la tangente à son bord intérieur 7 forme avec la tangente au contour d'enceinte interne 9, au niveau de leur intersection, un angle noté θ1 compris entre 70° et 110°, et valant de préférence 90°. En particulier, les tangentes aux pales passant par le bord extérieur 8 et le bord intérieur 7 forment conjointement un angle noté θ2 compris entre 60° et 100°, et valant préférentiellement 89°.

Le rotor 2 peut être découpé en une moitié périphérique amont et une moitié périphérique aval, séparée l'une de l'autre par une ligne médiane M, ou plan médian en perspective, orientée selon la direction d'envergure AZ passant par l'axe de rotation. La moitié périphérique amont constitue la plus grande surface de rotor pouvant être exposée directement au vent d'orientation constante V. En pratique, les pales 6 situées au niveau de la partie périphérique amont ne sont pas toutes orientées pour exposer au vent leur partie concave, rendant le passage de l'air au niveau d'un secteur de cette partie périphérique amont inapte à mouvoir le rotor 2 dans le sens souhaité.

Afin d'augmenter le rendement de fonctionnement, l'invention vise à ce que la plus grande quantité de vent rencontrant le rotor 2 soit utile à sa mise en rotation.

A cet égard, une particularité de l'invention réside dans l'implantation d'un déflecteur 18. Selon le premier mode de réalisation de la turbine, ce déflecteur 18 est un élément volumique de forme prismatique fixé au bâti 3. Il est situé à la périphérie du rotor 2, et délimité par une paroi déflectrice 19, une paroi de rétention 21, une paroi de fermeture 22 et deux parois transversales 23 reliant ensemble ces parois déflectrice, de rétention et de fermeture.

La paroi déflectrice 19 s'écarte suivant AZ de la paroi support 14 d'amont en aval en s'étendant depuis une extrémité amont 24, située en amont du rotor 2 selon AX et située entre l'axe de rotation du rotor et la paroi support 14 selon AZ, jusqu'à une extrémité d'admission 26 située à la fois en périphérie du rotor 2 et en aval de l'extrémité amont 24 suivant AX. L'étendue de cette paroi déflectrice 19 suivant la direction d'envergure AZ est définie pour qu'elle forme une barrière empêchant le vent d'orientation V d'atteindre le secteur de la moitié périphérique amont, correspondant à sa projetée suivant AX, dont les pales 6 exposent frontalement leur partie convexe.

De plus, la paroi déflectrice 19 forme une rampe s'éloignant de la paroi support 14 pour rediriger des lignes de courant du vent d'orientation V la rencontrant en amont du rotor 2, formant conjointement un flux noté Vd sur la figure 2, vers la partie concave des pales 6 situées dans le prolongement de l'extrémité d'admission 26 et ainsi les mouvoir. Plus spécifiquement, une division du vent d'orientation V s'amorce au niveau de l'extrémité amont 24 de la paroi déflectrice 19. La résultante de cette division forme d'une part le flux Vd qui longe la paroi déflectrice 19 pour alimenter le rotor, et d'autre part un flux noté Vs qui contourne la paroi déflectrice 19 en longeant la paroi de fermeture 22.

La turbine 1 exploite ainsi la quantité de vent Vd qui, sans une telle paroi déflectrice 19, constituerait une source d'abattement de performances dans la mesure où les pales seraient pressées dans le sens inverse à la rotation du rotor 2.

La paroi de rétention 21 prolonge la paroi déflectrice 19 en longeant le contour périphérique 11 vers l'aval, dans le sens contrarotatif du rotor 2, depuis l'extrémité d'admission 26 vers une extrémité aval 27. Cette paroi de rétention 21 canalise l'air dans l'enceinte de rotor, autrement dit après son premier passage au travers des pales 6, pour l'empêcher de refluer vers l'amont AM durant son second passage à travers les pales. A cet égard, la paroi de rétention 21 est avantageusement disposée au plus proche du rotor 2 pour limiter tout débit de fuite existant entre celle-ci et le bord extérieur 8 des pales, sans pour autant gêner la rotation du rotor 2.

Enfin, la paroi de fermeture 22, qui s'étend depuis l'extrémité amont 24 jusqu'à l'extrémité aval 27, relie les parois déflectrice et de rétention 19 et 21, en s'étendant à distance de la paroi support 14 suivant AZ.

Le dimensionnement du déflecteur 18 est défini avantageusement par la suite, en coordonnées cylindriques, avec une composante dite radiale et une composante dite angulaire. D'une manière générale, la coordonnée radiale d'un élément considéré est définie comme son espacement avec l'axe de rotation du rotor. La coordonnée angulaire est définie quant à elle comme l'angle formé, selon une lecture dans le sens de rotation du rotor, entre la droite qui passe par l'axe de rotation du rotor en intersectant cet élément et la droite longitudinale passant par l'axe de rotation du rotor.

L'extrémité d'admission 26 présente une coordonnée radiale, notée L1, comprise entre 0,5 et 0,6 fois le diamètre D du contour périphérique 11, de préférence 0,515 fois le diamètre D ; et une coordonnée angulaire, notée α1, comprise entre -20° et +20° et de préférence égale à -5,3°. En particulier, la tangente à la paroi déflectrice 19, la contactant au niveau de l'extrémité d'admission 26, forme conjointement avec la direction longitudinale AX un angle, repéré par α4, compris entre -45° et -100°, et valant de préférence -84,3°.

En ce qui concerne l'extrémité amont 24, sa coordonnée radiale, notée L2, est comprise entre 0,9 et 1,5 fois le diamètre D du contour périphérique 11, et vaut de préférence 1,2 fois le diamètre D. Complémentairement, sa coordonnée angulaire, notée α2, est comprise entre -20° et -60°, et vaut préférentiellement -23,9°.

Enfin, l'extrémité aval 27 présente une coordonnée radiale, notée L3, comprise entre 0,5 et 0,75 fois le diamètre D du contour périphérique 11, valant de préférence 0,550 fois le diamètre D ; et une coordonnée angulaire, notée α3, comprise entre -45° et -100° et valant de préférence -87,1°.

L'invention vise à augmenter le rendement de fonctionnement via aussi une augmentation du débit d'air traversant le rotor 2.

A cet effet, une particularité de l'invention réside dans l'implantation d'un concentrateur comprenant une paroi de concentrateur 28 se présentant sous la forme d'une plaque, préférentiellement incurvée, qui est rigidement fixée au bâti 3.

A l'inverse de la paroi déflectrice 19 du déflecteur 18, qui vise à couvrir un secteur de rotor de la moitié périphérique amont avec les pales exposant leur côté convexe et dont une exposition frontale au vent d'orientation V serait donc contreproductive, la paroi de concentrateur 28 forme une extension radiale fixe du rotor 2 visant à élargir le champ de captation de ce dernier. Cette paroi de concentrateur 28 est prévue pour prolonger radialement la moitié périphérique amont du rotor 2.

Dans l'exemple des figures 1 et 2, la paroi de concentrateur 28 s'étend depuis une bordure amont 29 située à distance du rotor 2 suivant la direction d'envergure AZ, vers une bordure aval 31 située à la fois en périphérie du rotor 2 et en aval de la bordure amont 29 suivant la direction longitudinale AX. Cette bordure aval 31 est globalement espacée diamétralement de l'extrémité aval 27 du déflecteur 18 par rapport au rotor 2.

Plus spécifiquement, la paroi de concentrateur 28 tend à rabattre un flux Vc qui correspond à une quantité du vent d'orientation V évoluant en amont dans un couloir de vent Xr qui n'est pas situé dans l'alignement axial du rotor, vers la partie concave des pales 6 situées dans le prolongement de la bordure aval 31. Ce couloir Xr est délimité suivant la direction d'envergure AZ entre la bordure amont 29 et la tangente au rotor qui s'étend longitudinalement et à proximité de la bordure aval 31. Plus spécifiquement, une division de vent se produit au niveau de la bordure amont 29 de la paroi de concentrateur 28, entre le flux Vc qui longe la paroi de concentrateur 28 jusqu'au rotor 2 pour l'alimenter, et un flux Va qui se propage au-delà du couloir Xr selon AZ.

Dans l'exemple des figures, la paroi de concentrateur 28 est courbée de manière à présenter une forme concave vu par le flux Vc, mais une autre forme peut être retenue tant que l'air est acheminé vers la partie concave des pales pour les mouvoir dans le sens de rotation souhaité.

Il est à noter que la bordure aval 31 s'étend au plus proche du contour périphérique 11 de rotor pour limiter tout débit de fuite existant à leur interface, sans pour autant empêcher la rotation du rotor 2. En effet, un tel débit de fuite correspond à une partie du flux Vc qui ne rencontre pas le rotor 2 et qui ne génère donc pas de couple de rotation.

Le dimensionnement du concentrateur 28 est lui aussi défini par rapport aux dimensions du rotor 2 et via l'utilisation de coordonnées cylindriques.

Selon l'invention, la coordonnée radiale de la bordure amont 29, notée K1, est comprise entre 0,6 et 1,5 fois le diamètre D, et de préférence vaut 0,747 fois le diamètre D. Sa coordonnée angulaire, notée β1, est comprise entre 30° et 120°, avec une valeur préférentielle de 63,6°.

La bordure aval 31 présente quant à elle une coordonnée radiale, notée K2, comprise entre 0,5 et 0,75 fois le diamètre D, de préférence valant 0,501 fois le diamètre D; et une coordonnée angulaire, notée β2, comprise entre 90° et 120°, valant de préférence 108°. En particulier, au-delà d'une valeur d'angle de 90°, il est compris que le concentrateur 28 augmente également radialement l'exposition du rotor 2 en détournant le vent d'orientation V pour qu'il le rencontre au niveau de sa moitié périphérique aval.

Concrètement, la paroi déflectrice 19 et la paroi de concentrateur 28 délimitent conjointement une voie de propagation primaire de vent Kp. Cette voie de propagation primaire Kp guide d'amont AM en aval AV un flux primaire Vp qui rencontre la turbine 1 jusqu'à un secteur périphérique du rotor d'admission, noté Xa, qui est délimité selon la direction d'envergure par l'extrémité d'admission 26 du déflecteur et la bordure aval 31 de la paroi de concentrateur 28. Ce flux primaire Vp désigne une composante du vent d'orientation V qui circule d'amont en aval vers la turbine 1 dans un champ dit d'admission primaire Xp qui s'étend longitudinalement dans l'alignement de la voie de propagation primaire Kp, en étant défini entre l'extrémité amont 24 de la paroi déflectrice 19 et la bordure amont 29 de la paroi de concentrateur. Plus spécifiquement, le flux primaire Vp est constitué de l'ensemble des lignes de courant du vent d'orientation V inscrites dans le champ d'admission primaire Xp, incluant donc les lignes de courant des quantités Vc et Vd issues des divisions de vent s'amorçant au niveau de l'extrémité amont de la paroi déflectrice et de la bordure amont de la paroi de concentrateur respectivement.

Etant donné que la paroi déflectrice 19 et la paroi de concentrateur 28 se rapproche du rotor d'amont en aval, on assiste en pratique d'amont en aval à une réduction de section de la voie de propagation primaire Kp. Plus précisément, la section de la voie de propagation primaire Kp diminue jusqu'au contour périphérique de rotor 2, au niveau duquel elle correspond à un secteur d'admission primaire d'air, noté Xa, délimité par l'extrémité d'admission 26 du déflecteur et la bordure aval 31 du concentrateur. Ce secteur d'admission primaire Xa constitue un secteur angulaire de rotor au niveau duquel se déroule le premier passage de vent à travers les pales 6.

Cette réduction de section induit une augmentation de la vitesse de vent. Ainsi, l'air rencontrant le bord extérieur 8 des pales est davantage chargé en énergie cinétique qu'en amont de turbine 1, ce qui contribue à améliorer l'efficacité du rotor 2.

Cependant, cette réduction de section induit également la formation de zones de surpression au niveau du déflecteur 18 et du concentrateur 28 qui tendent à dévier le vent avant son admission dans le rotor 2, autrement dit à réduire le débit d'air le traversant. Afin de limiter cet effet néfaste, un angle δ, formé entre la direction d'envergure AZ et une droite passant par l'extrémité amont 24 et la bordure amont 29, présente selon l'invention une valeur comprise entre 30° et 60°, et de préférence égale à 35°.

Le milieu urbain étant marqué par des fluctuations momentanées de vitesse de vent, l'invention vise à limiter l'incidence de celles-ci sur le rendement de fonctionnement de la turbine. Autrement dit, il s'agit de rendre la turbine plus performante pour une large gamme de vitesses de vent.

A cet effet, le déflecteur 18 et le concentrateur 28 délimitent également, entre la bordure aval 31 et l'extrémité aval 27, le secteur de rotor associé à l'éjection de l'air, repéré par Xf. Ce secteur d'éjection Xf qui constitue le secteur angulaire de rotor au niveau duquel se termine le second passage du vent à travers les pales 6, est ainsi directement ouvert sur un espace de décharge E à l'extérieur de turbine 1. Autrement dit, le flux d'air quittant le rotor, n'est pas guidé par une surface particulière à géométrie fixe pour lui conférer une orientation prédéfinie.

Un tel arrangement selon l'invention, à rotor ouvert sur l'extérieur de turbine au niveau du secteur d'éjection d'air Xf, permet d'augmenter globalement le rendement en comparaison avec une architecture à rotor prolongé par une surface de guidage d'air qui améliorerait le rendement pour un vent de vitesse prédéfinie mais le dégraderait pour des vitesses différentes. A noter également que l'absence de toute surface de guidage prolongeant le secteur d'éjection Xf rotor 2 vers l'aval induit des coûts de fabrication réduits.

Aussi, une particularité de l'invention est d'augmenter le rendement de la turbine 1 en augmentant le potentiel de restitution énergétique de l'air à son second passage à travers les pales 6. Pour ce faire, la turbine 1 définit une voie de propagation secondaire, repérée par Ks, qui est séparée de la voie de propagation primaire Kp.

Cette voie de propagation secondaire Ks s'étend entre la paroi support 14 et le déflecteur 18 qui est situé à distance selon AZ, à savoir suivant la direction d'envergure, de la paroi support 14, et s'étend suivant la direction longitudinale AX d'amont vers l'aval en contournant le rotor 2 jusqu'à déboucher sur l'espace de décharge E, à proximité du secteur d'éjection Xf.

Elle est alimentée par le flux Vs, désigné ci-après par flux secondaire, qui contourne la paroi déflectrice 19 en longeant la paroi de fermeture 22 qui empêche l'air de venir frapper la partie convexe des pales le long de son étendue. Ce flux secondaire Vs correspond à une composante du vent d'orientation V qui circule d'amont en aval vers la turbine 1 dans un champ dit d'admission secondaire Xs qui s'étend longitudinalement dans l'alignement de la voie de propagation secondaire Ks. Ce champ d'admission secondaire Xs s'étend suivant la direction d'envergure AZ en amont de la voie de propagation secondaire Ks entre l'extrémité amont de la paroi déflectrice et la paroi support 14.

Dans l'exemple de la figure 2, cette voie de propagation secondaire Ks est délimitée successivement d'amont en aval par la paroi de fermeture 22 et la paroi support 14 puis par la paroi de fermeture 22 et une embase 33 qui est montée rigidement au bâti 3.

Cette embase 33 se présente sous la forme d'un bossage en comprenant une paroi de base 34 et une paroi bombée 36 qui prolonge de part et d'autre la paroi de base 34 vers le rotor 2 suivant la direction d'envergure AZ. Dans l'exemple de la figure 2, l'embase 33 forme un socle de turbine, avec sa paroi de base 34 prévue pour reposer directement sur la paroi support 14.

D'une manière générale, la paroi bombée 36 peut être scindée d'amont en aval en une partie 36a qui se rapproche du rotor 2 suivant AZ en regard de la paroi de fermeture 22 du déflecteur, et d'une partie 36b qui s'éloigne du rotor 2 longitudinalement au-delà de l'extrémité aval 27 du déflecteur. Avec cet arrangement, la voie de propagation secondaire Ks forme un canal d'amplification convergeant le long de la portion définie entre la partie 36a de la paroi bombée 36 et la paroi de fermeture 22 du déflecteur suivant l'axe AZ jusqu'à déboucher dans l'espace de décharge E.

En s'engouffrant dans le canal d'amplification 32, le flux d'air subit une accélération due au rétrécissement de la section de passage formant un convergeant. En sortie du canal d'amplification 32, le flux d'air ayant traversé la voie de propagation secondaire Ks n'est plus canalisée en débouchant à proximité de la section d'éjection Xf. Il s'ensuit l'apparition d'une zone de surpression en amont de ce canal d'amplification 32 et une zone de dépression en aval, par effet venturi. Cette zone de dépression génère alors une aspiration de l'air situé au sein de l'enceinte interne de rotor vers la section d'éjection Xf, tendant à lui rendre une partie de l'énergie cinétique qui lui a été extraite lors de son premier passage au travers des pales 6. L'air rencontrant les pales 6 lors de son second passage est ainsi réenrichi en énergie cinétique pour générer un couple de rotation plus important.

Dans l'exemple de la figure 2, l'embase 33 forme un socle de la turbine 1, avec sa paroi de base 34 prévue pour reposer directement sur la paroi support 14, mais il est à noter qu'un arrangement dans lequel l'embase 33 s'étend suivant AZ entre le déflecteur 18 et la paroi support 14, sur laquelle est destinée à reposer la turbine 1, peut être retenu comme illustré sur la figure 1.

Dans l'exemple des figures 1 et 2 illustrées, le caractère convergeant de la voie de propagation secondaire Ks, à savoir au niveau du canal d'amplification 32, est assuré par l'embase 33 qui se présente sous la forme d'un bossage, tandis que la paroi de fermeture 22 s'étend parallèlement à la direction longitudinale AX. On peut néanmoins prévoir à l'inverse que l'embase 33 soit une plaque plane et que la paroi de fermeture 22 du déflecteur 18 s'étende d'amont en aval vers l'embase suivant l'axe AZ. Aussi, il est à noter qu'un arrangement pour lequel le canal d'amplification 32 est conjointement formé par le déflecteur 18 et la paroi support 14 se substituant à l'embase 33, ne sort pas du cadre de l'invention. Enfin, l'embase 33 peut être prolongée vers l'amont par une plaque plane portée par le bâti 3 pour reposer le long de son étendue sur la paroi support 14 et ainsi délimiter la voie de propagation secondaire Ks en amont du canal d'amplification en lieu et place de la paroi support 14. Autrement dit, l'invention n'est pas limitée en ce que la voie de propagation secondaire Ks est définie conjointement par le déflecteur 18 et la paroi support 14, mais peut être intégralement définie par des surfaces de guidage d'air de la turbine 1.

L'invention prévoit d'enrichir la turbine 1, par une écope, repérée par 37 sur la figure 2. Cette écope 37 est formée dans le déflecteur 18, en se rapprochant du rotor 2 d'amont en aval depuis une ouverture de prélèvement d'air 38 qui est ouverte sur la voie de propagation secondaire Ks en étant formée dans la paroi de fermeture 22 et en amont du canal d'amplification 32, jusqu'à une ouverture d'échappement 39 qui débouche au niveau de la paroi de rétention 21. Cette ouverture d'échappement 39 délimite un secteur d'admission auxiliaire Xb du rotor 2.

Concrètement, cette écope 37 est configurée pour prélever un flux dit auxiliaire Vk en amont du canal d'amplification 32, formant partie du flux secondaire Vs, pour le véhiculer vers la partie concave des pales 6 situées dans le prolongement direct de l'ouverture d'échappement 39, c'est-à-dire au niveau du secteur d'admission auxiliaire Xb de rotor qui est couvert du vent d'orientation V par la paroi déflectrice 19. Comme il est compris, le flux débouchant au niveau de l'espace de décharge en fin de course du canal d'amplification convergeant 32 correspond au flux secondaire Vs ôté du flux auxiliaire Vk.

En pratique, le flux auxiliaire Vk est aspiré passivement dans l'écope en raison de l'existence de la zone de suppression en amont du canal d'amplification 32.

Entendu que le flux auxiliaire Vk est distinct du flux primaire Vp, il est compris que l'écope 37 forme une voie indépendante de premier passage d'air dans le rotor 2 afin d'apporter une poussée complémentaire sur les pales 6 à celle obtenu par le flux primaire Vp.

Une fois dans l'enceinte interne de rotor, le flux auxiliaire Vk se mélange au flux primaire Vp ayant traversé le rotor au niveau du secteur d'admission Xa, pour gonfler le débit global d'air lors du second passage à travers les pales et ainsi augmenter le couple de rotation généré, en comparaison avec une architecture exempte d'écope 37.

De manière générale, l'écope 37 octroie un meilleur rendement de fonctionnement via une augmentation du débit traversant le rotor 2, sans pour autant augmenter l'exposition frontale du rotor 2, le secteur de rotor d'amission auxiliaire Xb étant couvert du vent d'orientation V par la paroi déflectrice 19. Selon l'invention, l'écope 37 s'étend avantageusement le long de l'étendue transversale du déflecteur 18, en formant une fente à section rectangulaire.

L'écope 37 a été décrite à ce stade comme extrayant une partie du flux secondaire Vs véhiculé au sein de la voie de propagation secondaire Ks et la guider vers un secteur de rotor d'admission auxiliaire Xb qui est situé au niveau de la paroi de rétention 21, autrement dit qui est situé au niveau de la moitié périphérique amont du rotor protégée du flux primaire Vp par la paroi déflectrice 19. Néanmoins, l'invention n'est pas limitée à cet arrangement particulier, et prévoit de manière générale une écope conformée pour prélever une partie du vent d'orientation V qui est distincte du flux primaire Vp dès lors qu'elle la guide d'amont en aval vers un secteur d'admission auxiliaire Xb situé au niveau de la moitié périphérique amont du rotor protégée du flux primaire Vp par la paroi déflectrice.

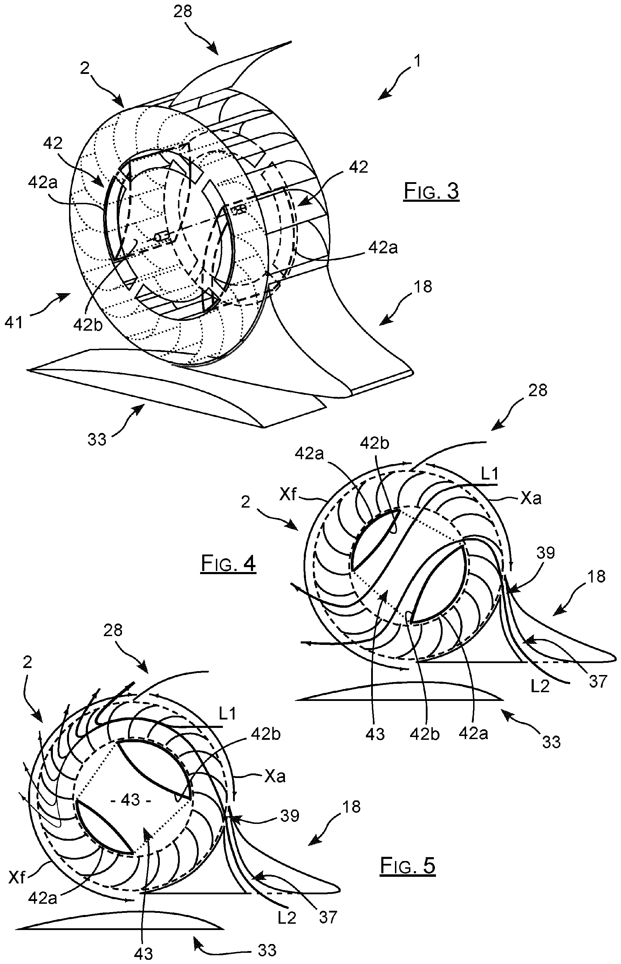

Une autre particularité de l'invention réside dans l'intégration possible d'un organe de stator, repéré par 41 sur la figure 3, dans l'enceinte interne de rotor.

Cet organe de stator 41, comporte deux modules de guidage 42 globalement agencés diamétralement en vis-à-vis l'un de l'autre par rapport à l'axe de rotation du rotor 2. Chaque module 42 présente une forme en amande, c'est-à-dire biconvexe, en comprenant une surface de guidage externe 42a, orientée vers l'extérieur du rotor 2, et une surface de guidage interne 42b qui sont réunies en une première et une seconde extrémité de ce module. La surface de guidage externe 42a de chaque module suit le contour d'enceinte interne 9 en s'étendant à proche distance des bords intérieurs 7 de pale. En ce qui concerne les surfaces de guidage interne 42b en vis-à-vis l'une de l'autre, elles délimitent conjointement un couloir 43.

L'organe de stator 41 est monté fixement à un disque, non visible, qui est centré sur l'axe de rotation du rotor et prévu déplaçable en rotation autour de cet axe, indépendamment de la rotation du rotor 2 sous l'action du vent. En particulier, cet organe de stator 41 est déplaçable entre une position dite ouverte et une position dite fermée.

La position ouverte d'organe de stator 41, illustrée sur la figure 3, marque la position pour laquelle le couloir 43 s'étend dans le prolongement des bords intérieurs 7 des pales situées au niveau du secteur d'admission primaire Xa du rotor 2, et également des pales situées dans le prolongement de l'écope 37, à savoir au niveau du secteur d'admission auxiliaire Xb, dans le cas d'une combinatoire de solutions organe de stator/écope. Ainsi, dans cette position ouverte, l'organe de stator 41 autorise la turbine à fonctionner en flux traversant. La trajectoire du vent est matérialisée par des lignes de courant L1 et L2 traversant le rotor 2 respectivement au niveau du secteur d'admission primaire Xa et au niveau du secteur d'admission auxiliaire Xb.

En particulier, le couloir 43, délimité par les surfaces de guidage internes 42b, canalise l'air à l'issue de son premier passage au travers des pales 6, pour le guider suivant une direction favorable contre la partie concave des pales 6 situées au niveau de la section d'éjection Xf en vue du second passage. En pratique, cette canalisation de l'air empêche également le développement de phénomènes tourbillonnaires au sein du rotor 2, ces phénomènes tourbillonnaires affectant les lignes de courant qui ne sont donc pas orientées vers la partie concave des pales lors du second passage et dès lors ne contribuent pas à fournir de l'énergie au rotor 2.

La position fermée d'organe de stator 41, visible sur la figure 4, marque la position pour laquelle la surface de guidage externe 42a d'un module 42 est située radialement en regard du secteur d'admission Xa, et dans le prolongement de l'ouverture d'échappement 39 dans le cas où la turbine inclut l'écope 37. Avec cet arrangement, l'organe de stator 41 condamne le passage de l'air, repéré par les lignes de courants L1 et L2, dans l'enceinte interne de rotor de manière à faire adopter à la turbine 1 un régime de fonctionnement calqué sur le principe d'une roue à aube. Selon ce régime de fonctionnement, l'air traversant le contour périphérique 11 presse les pales tout en restant emprisonné au niveau des espaces inter-pales jusqu'à atteindre le secteur d'éjection Xf au niveau duquel il est libre de s'échapper.

En pratique, ce régime de fonctionnement conduit à des vitesses de rotation du rotor 2 réduites en comparaison avec celles mesurées dans le cas d'un fonctionnement à flux traversant. A cet égard, le déplacement de l'organe de stator 41 est avantageusement piloté pour le maintenir en position d'ouverture tant que le vent d'orientation V présente une vitesse inférieure à une valeur seuil, et en position de fermeture pour une vitesse de vent excédent cette valeur seuil. La valeur seuil est définie comme la vitesse maximum admissible de vent pour laquelle la rotation du rotor ne présente pas de risque pour l'intégrité de la turbine ou des accessoires qui lui sont accouplés, tel qu'un convertisseur de couple de rotation du rotor en énergie électrique, appelée aussi génératrice, lorsque la turbine est utilisée pour générer de l'électricité.

Concrètement, l'organe de stator 41 permet une performance dans sa position d'ouverture, conférant une meilleure maîtrise du flux d'air traversant le rotor, et apporte une composante de sécurité dans sa position de fermeture.

L'organe de stator 41 a été expliqué dans le cas où il comprend deux modules 42, mais d'autres architectures sont envisageables. A titre d'exemple, une architecture d'organe de stator incluant un seul module 42 pourrait être retenu en ce qu'il permet à lui seul de d'obturer le passage d'air dans l'enceinte de rotor lorsqu'il se trouve en position fermée, et de former une surface de guidage d'air en position ouverte.

En référence à la figure 6, une turbine 1 selon un deuxième mode de réalisation comprend, de la même manière que pour le premier mode de réalisation, des parois de guidage de vent définissant :
- un secteur de rotor d'admission primaire Xa de vent,
- une voie de propagation primaire Kp adaptée pour guider d'amont AM en aval AV un flux primaire Vp du vent d'orientation V rencontrant la turbine jusqu'au secteur d'admission primaire pour l'alimenter,
- un secteur de rotor d'éjection Xf qui est ouvert sur un espace de décharge E,
- un secteur de rotor d'admission auxiliaire Xb s'étendant angulairement par rapport à l'axe transversal AY entre le secteur d'admission primaire Xa et le secteur d'ejection Xf,
- une écope 37 qui est adaptée pour guider d'amont AM en aval AV un flux auxiliaire Vk du vent V jusqu'au secteur d'admission auxiliaire Xb pour l'alimenter, et
- une voie de propagation secondaire Ks adaptée pour guider d'amont en aval un flux secondaire Vs, cette voie de de propagation secondaire Ks contournant le rotor pour déboucher dans l'espace de décharge E, à proximité du secteur d'éjection Xf.

La turbine selon le second mode de réalisation présente un mode de fonctionnement identique à la turbine selon le premier mode de réalisation, mais en diffère structurellement de par l'architecture du déflecteur noté 51. Le dimensionnement du rotor 2, de la paroi de concentrateur 28, et de l'embase 33 tel que défini dans le premier mode de réalisation reste applicable. L'organe de stator 41 tel que défini au regard des figures 3 et 4 trouve également son application dans ce second mode de réalisation.

Le déflecteur 51 comprend une première paroi déflectrice 52 portée par le bâti 3 qui s'étend d'amont en aval en se rapprochant du rotor 2 et en s'écartant suivant AZ de la paroi support 14 depuis une extrémité amont 53 jusqu'à une extrémité d'admission 54 située en périphérie du rotor 2. De la même manière que la paroi déflectrice 19 du premier mode de réalisation, l'étendue de cette première paroi déflectrice 52 suivant la direction d'envergure AZ est définie pour qu'elle forme une barrière empêchant le vent d'orientation V d'atteindre un secteur du rotor de sa moitié périphérique amont dont les pales 6 exposent frontalement leur partie convexe.

Cette première paroi déflectrice 52 se substitue à la paroi déflectrice 19 du premier mode de réalisation en délimitant conjointement avec la paroi de concentrateur 28 la voie de propagation primaire Kp de vent. Cette voie de propagation primaire Kp guide d'amont AM en aval AV un flux primaire Vp jusqu'au secteur de rotor d'admission Xa qui est délimité par l'extrémité d'admission 54 de la première paroi déflectrice 52 et la bordure aval 31 de la paroi de concentrateur 28. Le champ d'admission primaire Xp associé à la voie propagation primaire Kp est délimité transversalement dans le prolongement longitudinal par l'extrémité amont 53 de la première paroi déflectrice 52 et la bordure amont 29 de la paroi de concentrateur.

Le déflecteur 51 comprend une deuxième paroi déflectrice 56 et une paroi de fermeture 57 portées par le bâti 3.

La deuxième paroi déflectrice 56 s'étend à distance et en aval de la première paroi déflectrice 52 en se rapprochant du rotor 2 et en s'écartant suivant AZ de la paroi support 14 depuis une extrémité amont 58 jusqu'à une extrémité aval 59 située en périphérie du rotor 2.

La paroi de fermeture 57 s'étend suivant la direction d'envergure à distance de la paroi support 14, en prolongeant longitudinalement vers l'aval la deuxième paroi déflectrice 56 depuis l'extrémité amont 58 de cette deuxième paroi déflectrice 56 jusqu'à une extrémité aval 60 de paroi de fermeture située à la périphérie du rotor 2. De la même manière que pour le premier mode de réalisation, le secteur de rotor d'éjection Xf est conjointement délimité par la bordure aval 31 de la paroi de concentrateur 28 et l'extrémité aval de la paroi de fermeture 22.

Aussi, de la même manière que le premier mode de réalisation, le déflecteur 51 sépare la voie de propagation primaire Kp de la voie de propagation secondaire Ks. De manière générale cette voie de propagation secondaire Ks s'étend entre la paroi support 14 et le déflecteur 51 situé à distance selon AZ de la paroi support 14, suivant la direction longitudinale AX d'amont vers l'aval en contournant le rotor 2 jusqu'à déboucher sur l'espace de décharge E, à proximité du secteur d'éjection Xf.

Dans l'exemple de la figure 6, la paroi de fermeture 57 délimite la voie de propagation secondaire Ks en empêchant l'air de venir frapper la partie convexe des pales le long de son étendue, et plus particulièrement délimite le canal d'amplification convergeant 32 conjointement avec l'embase 33 reprise du premier mode de réalisation. Le champ d'admission secondaire Xs, associé à la voie propagation secondaire Ks, est délimité suivant la direction d'envergure AZ, dans le prolongement longitudinal de cette voie propagation secondaire Ks, par la paroi support 14 et l'extrémité amont 53 de la première paroi déflectrice 52 où s'effectue une division entre le flux primaire et secondaire.

L'écope 37, délimitée conjointement par les première et deuxième parois déflectrice 52 et 56, s'étend en se rapprochant du rotor 2 d'amont AM en aval AV depuis une ouverture de prélèvement d'air 38 qui est ouverte sur la voie de propagation secondaire Ks et en amont du canal d'amplification 32, jusqu'à une ouverture de d'échappement 39. L'ouverture de prélèvement 38 est définie par les extrémités extrémité amont 53 et 58 respective des première et deuxième parois déflectrices 52 et 56, tandis que l'ouverture d'échappement 39 est définie par l'extrémité d'admission 54 de la première paroi déflectrice et l'extrémité aval 59 de la deuxième paroi déflectrice 56. Cette ouverture d'échappement 39 correspond sensiblement au secteur de rotor d'admission auxiliaire Xb qui s'étend angulairement par rapport à l'axe transversal AY entre le secteur d'admission primaire Xa et le secteur d'éjection Xf. De la même manière que pour le premier mode de réalisation, il est compris que le flux débouchant au niveau de l'espace de décharge E en fin de course du canal d'amplification convergeant 32 correspond au flux secondaire Vs ôté du flux auxiliaire Vk.

Cette écope 37 est configurée pour extraire au sein de la voie de propagation secondaire Ks le flux auxiliaire Vk en amont du canal d'amplification 32, pour le véhiculer vers la partie concave des pales 6 au niveau du secteur d'admission auxiliaire Xb de rotor qui est couvert du vent d'orientation V par la première paroi déflectrice 52.

En pratique, l'arrangement des première et deuxième parois déflectrices et de la paroi de fermeture 57 selon le deuxième mode de réalisation est un cas particulier du premier mode de réalisation pour lequel l'écope 37 est un volume évidé dans le déflecteur 18 en étant formé en affleurement de la paroi déflectrice 19 en suivant son contour.

Avantageusement, le déflecteur 51 de la turbine selon le second mode de réalisation comprend en outre une paroi de déviation 61, portée par le bâti 3, qui permet d'augmenter la quantité de flux auxiliaire apportée au niveau du secteur d'admission auxiliaire Xb du rotor 2.

La paroi de déviation 61 chevauche les champs d'admission primaire et secondaire Xp, Xs tels que définis à ce stade en s'étendant d'amont AM en aval AV depuis une extrémité amont 61a jusqu'à une extrémité aval 61b en se rapprochant de la paroi support 14, de manière à être apte à prélever un flux de déviation Vh du vent d'orientation V circulant dans le champ d'admission primaire Xp et le guider vers la voie de propagation secondaire Ks. Cette paroi de déviation délimite, conjointement avec la paroi support 14, une portion de la voie de propagation secondaire Ks.

En pareil cas, le flux primaire Vp correspond à la quantité de vent s'étendant dans le champ d'admission primaire Xp qui est ôtée du flux de déviation Vh longeant la paroi de déviation 61, tandis que le flux secondaire Vs correspond à la quantité de vent s'étendant dans le champ d'admission secondaire Xs enrichie du flux de déviation Vh.

Aussi, le déflecteur 51 comprend une paroi de séparation 62, portée par le bâti, qui s'étend le long de l'écope 37, entre les première et deuxième parois déflectrices 52, 56, pour délimiter un premier passage et un second passage d'écope prévus chacun pour guider une partie Vk1, Vk2 respective du flux auxiliaire Vk vers la partie concave des pales 6 au niveau du secteur d'admission auxiliaire de rotor Xb. Plus spécifiquement, le premier passage d'écope est délimité par la première paroi déflectrice 52 et la paroi de séparation 62, et le second passage d'écope est délimité par cette paroi de séparation 62 et la deuxième paroi déflectrice 56. Comme il est compris, cette paroi de séparation 62 permet d'optimiser l'orientation du flux auxiliaire Vk lors de son premier passage au travers du rotor 2.

Avantageusement, la paroi de séparation 62 dépasse de l'écope 37 au sein de la voie de propagation secondaire Ks en traversant l'ouverture de prélèvement 38, et complémentairement, la paroi de déviation 61 s'étend au sein de la voie de propagation secondaire Ks entre la première paroi déflectrice 52 et la paroi de séparation 62 selon la direction d'envergure AZ. En particulier, l'invention prévoit que la paroi de séparation s'étend à une distance comprise entre 2 et 6 centimètres, et de préférence 4 centimètres, de la première paroi déflectrice 52 au sein de la voie de propagation secondaire Ks. Avec cet arrangement, le flux de déviation Vh est guidé vers le premier passage d'écope pour enrichir préférentiellement la partie Vk1 correspondante du flux auxiliaire Vk.

Enfin, la turbine selon le deuxième mode de réalisation comprend avantageusement une paroi de répartition 63, portée par le bâti 3, qui s'étend d'amont AM en aval AV depuis une extrémité amont 63a jusqu'à une extrémité aval 63b au sein de la voie de propagation primaire Kp en se rapprochant de la paroi de concentrateur 28 pour scinder le flux primaire Vp en deux jets Vp1, Vp2 distincts et orientés chacun vers la partie concave des pales 6 du rotor au niveau du secteur d'admission primaire. Comme il est compris, cette paroi de répartition permet d'optimiser davantage la direction du flux primaire Vp lors de son premier passage au travers du rotor 2, à l'instar de la paroi de séparation 62 au regard du flux auxiliaire Vk.

De la même manière que dans le cas du premier mode de réalisation, le dimensionnement du déflecteur 51 et de la paroi de répartition 63 selon le deuxième mode de réalisation de l'invention est défini en coordonnées cylindriques, avec une composante dite radiale et une composante dite angulaire. D'une manière générale, la coordonnée radiale d'un élément considéré est définie comme son espacement avec l'axe de rotation du rotor. La coordonnée angulaire est définie quant à elle comme l'angle formé, selon une lecture dans le sens de rotation du rotor, entre la droite qui passe par l'axe de rotation du rotor en intersectant cet élément et la droite longitudinale passant par l'axe de rotation du rotor.

L'extrémité d'admission 54 de la première paroi déflectrice 52 présente une coordonnée radiale, notée L5, comprise entre 0,5 et 0,7 fois le diamètre D du contour périphérique 11, de préférence 0,52 fois le diamètre D ; et une coordonnée angulaire, notée α4, comprise entre -25° et +20° et de préférence égale à -9°.

Aussi, l'extrémité amont 53 de la première paroi déflectrice 52 présente une coordonnée radiale, notée L6, comprise entre 0,7 et 1,25 fois le diamètre D, de préférence 1,02 fois le diamètre D ; et une coordonnée angulaire, notée α6, comprise entre -10° et -45° et de préférence égale à -32°.

En ce qui concerne l'extrémité amont 61a de la paroi de déviation 61, sa coordonnée radiale, notée L7, est comprise entre 0,75 et 1,75 fois le diamètre D, et vaut de préférence 1,21 fois le diamètre D. Complémentairement, sa coordonnée angulaire, notée α7, est comprise entre -10° et -45°, et vaut préférentiellement -24°.

L'extrémité aval 60 de la paroi de fermeture 57 présente une coordonnée radiale, notée L8, comprise entre 0,5 et 0,75 fois le diamètre D, valant de préférence 0,56 fois le diamètre D ; et une coordonnée angulaire, notée α8, comprise entre -50° et -120° et valant de préférence -86°.

Pour ce qui est de la paroi de répartition 63, elle est dimensionnée pour présenter un rayon de courbure d'une valeur de 0,1 à 1 fois le diamètre D, de préférence égale à 0,26 fois le diamètre D. Son extrémité amont 63a présente une coordonnée radiale, notée M1, comprise entre 0,6 et 1 fois le diamètre D, de préférence 0,75 fois le diamètre D ; et une coordonnée angulaire, notée δ 2, comprise entre -25° et +15° et de préférence égale à -13,5°. Son extrémité aval 63b présente une coordonnée radiale, notée M2, comprise entre 0,5 et 0,7 fois le diamètre D, de préférence 0,53 fois le diamètre D ; et une coordonnée angulaire, notée δ1, comprise entre -10° et +40° et de préférence égale à 8,1°.

Quel que soit le mode de réalisation considéré, l'ensemble des parois de guidage de vent sont avantageusement des plaques de tôle rigidement portées par le bâti 3 au niveau de leurs extrémités transversales, à titre non limitatif par encastrement, ces parois de guidage de vent incluant dans l'exemple des figures illustrées : les parois déflectrices 19, 52, 56, de séparation 62, de déviation 61, de concentrateur 28, de fermeture 22, 57, de répartition 63 et la paroi bombée 36 de l'embase 33. Il est compris qu'un tel arrangement permet de limiter au maximum toute perturbation de flux et ainsi optimiser le travail utile des pales 6 du rotor.

Dans la description ci-dessus, le fonctionnement de la turbine 1 selon l'invention a été expliqué dans le cas où elle baigne dans un vent dont l'orientation V coïncide avec la direction longitudinale de turbine. En pratique, il est compris que la turbine est apte à fonctionner dès lors qu'elle capte un vent, à savoir également lorsqu'elle baigne dans un vent se propageant en biais par rapport à la direction longitudinale AX. D'une manière générale, la turbine est installée de manière à être exposée à un vent qui présente une composante suivant une direction longitudinale AX, ce qui englobe un vent de face comme un vent de biais par rapport à la direction longitudinale AX de turbine.

Aussi, la turbine 1 selon l'invention a été expliquée pour une application en tant que convertisseur d'énergie éolienne en énergie mécanique, à savoir en transformant l'énergie cinétique du vent en couple de rotation de son rotor 2, et plus particulièrement en qualité d'aérogénérateur d'électricité lorsqu'elle est équipée d'un convertisseur de couple de rotation du rotor en énergie électrique.

Cependant, une application de la turbine 1 en tant que génératrice de vent, visant à l'inverse à entraîner en rotation le rotor 2 par un moteur électrique afin de de propulser de l'air au niveau du secteur d'éjection Xf, peut aussi s'avérer utile. La turbine en qualité de génératrice de vent est exposée en amont à un vent qu'elle induit par aspiration du fait de l'entrainement de son rotor.

## Revendications

1. Turbine aéraulique (1) à flux traversant, destinée à être installée sur une paroi support (14) pour être exposée à un vent (V) circulant d'amont (AM) en aval (AV) selon une direction présentant une composante suivant une direction longitudinale (AX) de cette turbine (1), cette direction longitudinale étant parallèle à la paroi support (14), cette turbine comprenant :
- un rotor (2) de type cage d'écureuil comportant des pales (6) arquées présentant une partie concave et une partie convexe ;
- un bâti (3) portant le rotor (2), celui-ci étant apte à tourner autour d'un axe transversal (AY) parallèle à la paroi support (14) et perpendiculaire à la direction longitudinale (AX), ce rotor présentant une moitié périphérique amont et une moitié aval séparée l'une de l'autre par une ligne médiane (M) passant par l'axe transversal et de direction perpendiculaire aux directions longitudinale (AX) et transversale (AY) ; et
- une pluralité de parois de guidage de vent portées par le bâti, ces parois de guidage délimitant au sein de la turbine :
- un secteur de rotor d'admission primaire (Xa) de vent,
- une voie de propagation primaire (Kp) adaptée pour guider d'amont (AM) en aval (AV) un flux primaire (Vp) du vent (V) rencontrant la turbine jusqu'au secteur d'admission primaire pour l'alimenter, cette voie primaire de vent étant délimitée par une première paroi déflectrice (19 ; 52) et une paroi de concentrateur (28) de la pluralité de parois de guidage de vent, la paroi de concentrateur (28) s'étendant d'amont en aval en se rapprochant de la paroi support (14) depuis une bordure amont (29) jusqu'à une bordure aval (31) situé en périphérie du rotor (2), la première paroi déflectrice (19 ; 52) s'écartant de la paroi support (14) d'amont en aval depuis une extrémité amont (24 ; 53) jusqu'à une extrémité d'admission (26 ; 54) située en périphérie du rotor pour protéger du vent (V) une portion de la moitié périphérique amont du rotor (2),
- un secteur de rotor d'éjection (Xf) de vent qui est ouvert sur un espace de décharge (E) ;
- un secteur de rotor d'admission auxiliaire (Xb) de vent s'étendant angulairement par rapport à l'axe transversal (AY) entre le secteur d'admission primaire (Xa) et le secteur d'ejection (Xf), ce secteur de rotor étant situé au niveau de la portion protégée du vent (V) par la surface déflectrice (19 ; 52) ;
- une écope (37), séparée de la voie de propagation primaire (Kp) par au moins une de la pluralité de parois de guidage, qui est adaptée pour guider d'amont (AM) en aval (AV) un flux auxiliaire (Vk) du vent (V) jusqu'au secteur d'admission auxiliaire (Xb) pour l'alimenter,
**caractérisée en ce que** la turbine comprenant une voie secondaire de propagation (Ks), séparée de la voie primaire de propagation (Kp) par au moins une de la pluralité de parois de guidage, qui est adaptée pour guider d'amont (AM) en aval (AV) un flux secondaire (Vs) du vent (V) rencontrant la turbine, cette voie de propagation secondaire (Ks) s'étendant selon la direction longitudinale (AX) en contournant le rotor (2) et en débouchant dans l'espace de décharge (E), à proximité du secteur d'éjection (Xf) ;
l'écope (37) s'étendant d'amont (AM) en aval (AV) depuis une ouverture de prélèvement (38) qui est ouverte sur la voie de propagation secondaire (Ks) ;
la voie de propagation secondaire (Ks) formant un canal d'amplification convergeant (32) en aval de l'ouverture de prélèvement (38) jusqu'à l'espace de décharge (E).

2. Turbine aéraulique selon la revendication 1, dans laquelle :
- l'écope (37) est délimitée par la première paroi déflectrice (52) et une deuxième paroi déflectrice (56) qui s'étend en aval de la première paroi déflectrice (52) en s'écartant de la paroi support (14) d'amont en aval depuis une extrémité amont (58) jusqu'à une extrémité aval (59) situé en périphérie du rotor ;
- le canal d'amplification convergeant (32) est délimité par une embase (33), montée rigidement au bâti (3) ou fixée sur la paroi support (14), et par une paroi de fermeture (57) qui prolonge vers l'aval l'extrémité amont de la deuxième paroi déflectrice (56),
dans laquelle l'embase (33) s'étend à distance de la paroi de fermeture (57) en formant un bossage dirigé vers cette paroi de fermeture (57).

3. Turbine aéraulique selon la revendication 1 ou 2, dans laquelle :
- la bordure amont (29) de la paroi de concentrateur (28) et l'extrémité amont (53) de la première paroi déflectrice (52) délimitent conjointement en amont de la turbine un champ d'admission primaire (Xp) qui s'étend longitudinalement dans l'alignement de la voie de propagation primaire (Kp) ;
- l'extrémité amont (53) de la première paroi déflectrice (52) et la paroi support (14) délimitent conjointement en amont de la turbine un champ d'admission secondaire (Xs) qui s'étend longitudinalement dans l'alignement de la voie de propagation secondaire (Ks) ;
- une paroi de déviation (61), de la pluralité de paroi de guidage, chevauche les champs d'admission primaire et secondaire (Xp, Xs) en s'étendant d'amont (AM) en aval (AV) en se rapprochant de la paroi support (14), de manière à être apte à prélever un flux de déviation (Vh) du vent (V) circulant dans le champ d'admission primaire (Xp) et le guider vers la voie de propagation secondaire (Ks), le flux primaire (Vp) correspondant à une quantité de vent s'étendant dans le champ d'admission primaire qui est ôtée du flux de déviation (Vh) en longenat la paroi de déviation (61), tandis que le flux secondaire (Vs) correspond à une quantité de vent s'étendant dans le champ d'admission secondaire (Xs) enrichie du flux de déviation (Vh).

4. Turbine aéraulique selon les revendications 1 ou 2, comprenant une paroi de séparation (62), de la pluralité de parois de guidage, qui s'étend le long de l'écope (37), entre les première et deuxième parois déflectrices (52, 56), pour délimiter un premier passage et un second passage d'écope prévus chacun pour guider une partie (Vkl, Vk2) respective du flux auxiliaire (Vk) vers la partie concave des pales (6) au niveau du secteur d'admission auxiliaire de rotor (Xb), le premier passage d'écope étant délimité par la première paroi déflectrice (52) et la paroi de séparation (62), et le second passage d'écope étant délimité par cette paroi de séparation (62) et la deuxième paroi déflectrice (56).

5. Turbine aéraulique selon la revendication 3 combinée à la revendication 4, dans laquelle :
- la paroi de séparation (62) dépasse de l'écope (37) au sein de la voie de propagation secondaire (Ks) en traversant l'ouverture de prélèvement (38) ;
- la paroi de déviation (61) s'étend au sein de la voie de propagation secondaire (Ks) entre la première paroi déflectrice (52) et la paroi de séparation (62) de sorte à ce que le flux de déviation (Vh) soit guidé vers le premier canal d'écope pour enrichir la partie (Vk1) correspondante du flux auxiliaire (Vk).

6. Turbine aéraulique selon l'une des revendications précédentes, comprenant une paroi de répartition (63), de la pluralité de parois de guidage, qui s'étend d'amont en aval au sein de la voie de propagation primaire (Kp) en se rapprochant de la paroi de concentrateur (28) pour scinder le flux primaire (Vp) en deux jets (Vpl, Vp2) orientés chacun vers la partie concave des pales (6) du rotor au niveau du secteur d'admission primaire.

7. Turbine aéraulique selon la revendication 1, dans laquelle les pales (6) sont des lames minces présentant une structure identique en forme de portion de surface cylindrique, au nombre de quatorze à vingt-six, et de préférence au nombre de vingt.

8. Turbine aéraulique selon la revendication 7, dans laquelle chaque pale (6) présente un rayon de courbure d'une valeur comprise entre 0,05 à 0,3 fois le diamètre (D) du rotor, et de préférence égale à 0,146 fois le diamètre (D) du rotor.

9. Turbine aéraulique selon la revendication 1, comprenant un organe de stator (41) logé intégralement dans le rotor (2) et monté mobile sur le bâti (3) pour être déplaçable entre une position ouverte dans laquelle il autorise un passage du flux d'air au travers du rotor (2) et une position fermée dans laquelle il condamne le passage de l'air au travers du rotor (2).

10. Turbine aéraulique selon la revendication 9, dans laquelle l'organe de stator (41) comprend deux modules de guidage (42) diamétralement en vis-à-vis l'un de l'autre par rapport à l'axe de rotation du rotor (2), chaque module de guidage (42) étant délimité par une surface de guidage externe (42a) et une surface de guidage interne (42b), avec
chaque surface de guidage externe (42a) étant orientée vers l'extérieur du rotor et dont une de ses surfaces de guidage externe (42a) s'étend dans le prolongement du secteur d'admission primaire (Xa) dans la position fermé d'organe de stator, et
les surfaces de guidages interne (42b) des deux modules délimitant conjointement un couloir (43) au sein du rotor (2), ce couloir s'étendant dans le prolongement du secteur d'admission primaire (Xa) dans la position ouverte d'organe de stator.

11. Aérogénérateur d'électricité comprenant une turbine aéraulique (1) selon l'une des revendications précédentes et un convertisseur de couple de rotation du rotor (2) en énergie électrique.

## Patentansprüche

1. Durchströmungs-Luftturbine (1), die dazu bestimmt ist, auf einer Stützwand (14) installiert zu werden, um einem Wind (V) ausgesetzt zu werden, der von stromaufwärts (AM) nach stromabwärts (AV) in einer Richtung zirkuliert, die eine Komponente in Längsrichtung (AX) derTurbine (1) aufweist, wobei die Längsrichtung parallel zur Stützwand (14) verläuft, wobei die Turbine Folgendes umfasst:
- einen Rotor (2) vom Käfigläufertyp, der bogenförmige Schaufeln (6) umfasst, die einen konkaven Teil und einen konvexen Teil aufweisen;
- einen Rahmen (3), der den Rotor (2) trägt, wobei dieser dazu ausgelegt ist, sich um eine Querachse (AY) parallel zur Stützwand (14) und senkrecht zur Längsrichtung (AX) zu drehen, wobei der Rotor eine stromaufwärts gelegene periphere Hälfte und eine stromabwärts gelegene Hälfte aufweist, die durch eine Mittellinie (M) voneinander getrennt sind, die durch die Querachse und in einer Richtung senkrecht zur Längsrichtung (AX) und Querrichtung (AY) verläuft; und
- eine Vielzahl von vom Rahmen getragenen Windleitwänden, wobei die Leitwände innerhalb der Turbine Folgendes begrenzen:
- einen primären Windeintrittsrotorsektor (Xa),
- einen primären Ausbreitungspfad (Kp), der dazu ausgebildet ist, eine primäre Strömung (Vp) des Windes (V), die auf die Turbine trifft, von stromaufwärts (AM) nach stromabwärts (AV) zum primären Eintrittssektor zu leiten, um ihn zu versorgen, wobei der primäre Windpfad durch eine erste Ablenkwand (19; 52) und eine Konzentratorwand (28) der Vielzahl von Windleitwänden begrenzt ist, wobei sich die Konzentratorwand (28) von stromaufwärts nach stromabwärts erstreckt, indem sie sich der Stützwand (14) von einer stromaufwärts gelegenen Kante (29) bis zu einer stromabwärts gelegenen Kante (31) nähert, die sich am Umfang des Rotors (2) befindet, wobei sich die erste Ablenkwand (19; 52) von der Stützwand (14) von stromaufwärts nach stromabwärts von einem stromaufwärts gelegenen Ende (24; 53) zu einem Eintrittsende (26; 54) wegbewegt, das sich am Umfang des Rotors befindet, um einen Teil der stromaufwärts gelegenen Umfangshälfte des Rotors (2) vor dem Wind (V) zu schützen,
- einen Windausstoßrotorsektor (Xf), der zu einem Entladungsraum (E) hin offen ist;
- einen zusätzlichen Windeintrittsrotorsektor (Xb), der sich winkelmäßig in Bezug auf die Querachse (AY) zwischen dem primären Eintrittssektor (Xa) und dem Ausstoßsektor (Xf) erstreckt, wobei der Rotorsektor sich an dem Abschnitt befindet, der durch die Ablenkfläche (19; 52) vom Wind (V) geschützt ist;
- einen Ableiter (37), der vom primären Ausbreitungspfad (Kp) durch mindestens eine der Vielzahl von Leitwänden getrennt ist und dazu ausgebildet ist, eine zusätzliche Strömung (Vk) des Windes (V) von stromaufwärts (AM) nach stromabwärts (AV) bis zu einem zusätzlichen Eintrittssektor (Xb) zu leiten, um ihn zu versorgen,
**dadurch gekennzeichnet, dass**
die Turbine einen sekundären Ausbreitungspfad (Ks) umfasst, der vom primären Ausbreitungspfad (Kp) durch mindestens eine der Vielzahl von Leitwänden getrennt ist und dazu ausgebildet ist, eine sekundäre Strömung (Vs) des Windes (V), die auf die Turbine trifft, von stromaufwärts (AM) nach stromabwärts (AV) zu leiten, wobei sich der sekundäre Ausbreitungspfad (Ks) in Längsrichtung (AX) unter Umgehung des Rotors (2) erstreckt und im Entladungsraum (E) nahe des Ausstoßsektors (Xf) mündet;
wobei sich der Ableiter (37) von einer Ableitöffnung (38), die zum sekundären Ausbreitungspfad (Ks) offen ist, von stromaufwärts (AM) nach stromabwärts (AV) erstreckt;
der sekundäre Ausbreitungspfad (Ks) einen konvergierenden Verstärkungskanal (32) stromabwärts der Ableitöffnung (38) bis zum Entladungsraum (E) bildet.

2. Luftturbine nach Anspruch 1, wobei:
- der Ableiter (37) durch die erste Ablenkwand (52) und eine zweite Ablenkwand (56) begrenzt ist, die sich stromabwärts der ersten Ablenkwand (52) von der Stützwand (14) weg von stromaufwärts nach stromabwärts von einem stromaufwärts gelegenen Ende (58) bis zu einem stromabwärts gelegenen Ende (59) erstreckt, das sich am Umfang des Rotors befindet;
- der konvergierende Verstärkungskanal (32) durch eine Basis (33), die starr am Rahmen (3) montiert oder an der Stützwand (14) befestigt ist, und durch eine Schließwand (57) begrenzt ist, die das stromaufwärts gelegene Ende der zweiten Ablenkwand (56) stromabwärts verlängert,
wobei sich die Basis (33) in einem Abstand von der Schließwand (57) erstreckt, indem sie einen auf diese Schließwand (57) gerichteten Vorsprung bildet.

3. Luftturbine nach Anspruch 1 oder 2, wobei:
- die stromaufwärts gelegene Kante (29) der Konzentratorwand (28) und das stromaufwärts gelegene Ende (53) der ersten Ablenkwand (52) gemeinsam stromaufwärts der Turbine ein primäres Eintrittsfeld (Xp) begrenzen, das sich in Längsrichtung in Ausrichtung mit dem primären Ausbreitungspfad (Kp) erstreckt;
- das stromaufwärts gelegene Ende (53) der ersten Ablenkwand (52) und die Stützwand (14) gemeinsam stromaufwärts der Turbine ein sekundäres Eintrittsfeld (Xs) begrenzen, das sich in Längsrichtung in Ausrichtung mit dem sekundären Ausbreitungspfad (Ks) erstreckt;
- eine Umleitungswand (61) der Vielzahl von Leitwänden das primäre und das sekundäre Eintrittsfeld (Xp, Xs) überlappt, die sich von stromaufwärts (AM) nach stromabwärts (AV) erstrecken, indem sie sich der Stützwand (14) nähern, so dass sie dazu ausgelegt ist, dem im primären Eintrittsfeld (Xp) zirkulierenden Wind (V) eine Umleitungsströmung (Vh) zu entnehmen und diese in Richtung des sekundären Ausbreitungspfads (Ks) zu leiten, wobei die primäre Strömung (Vp) einer Windmenge entspricht, die sich in das primäre Eintrittsfeld erstreckt, das der Umleitungsströmung (Vh) entlang der Umleitungswand (61) entzogen wird, während die sekundäre Strömung (Vs) einer Windmenge entspricht, die sich in das sekundäre Eintrittsfeld (Xs) erstreckt, das mit der Umleitungsströmung (Vh) angereichert ist.

4. Luftturbine nach Anspruch 1 oder 2, umfassend eine Trennwand (62) der Vielzahl von Leitwänden, die sich entlang des Ableiters (37) zwischen der ersten und der zweiten Ablenkwand (52, 56) erstreckt, um einen ersten Durchgang und einen zweiten Durchgang des Ableiters zu begrenzen, die jeweils zum Leiten eines jeweiligen Teils (Vkl, Vk2) der zusätzlichen Strömung (Vk) zum konkaven Teil der Schaufeln (6) am zusätzlichen Rotoreintrittssektor (Xb) vorgesehen sind, wobei der erste Ableiterdurchgang durch die erste Ablenkwand (52) und die Trennwand (62) begrenzt ist, und der zweite Ableiterdurchgang durch die Trennwand (62) und die zweite Ablenkwand (56) begrenzt ist.

5. Luftturbine nach Anspruch 3 in Kombination mit Anspruch 4, wobei:
- die Trennwand (62) über den Ableiter (37) innerhalb des sekundären Ausbreitungspfads (Ks) hinausragt, indem sie durch die Entnahmeöffnung (38) verläuft;
- die Umleitungswand (61) sich innerhalb des sekundären Ausbreitungspfads (Ks) zwischen der ersten Umleitungswand (52) und der Trennwand (62) erstreckt, so dass die Umleitungsströmung (Vh) zum ersten Ableiterkanal geleitet wird, um der entsprechenden Teil (Vk1) der zusätzlichen Strömung (Vk) anzureichern.

6. Luftturbine nach einem der vorhergehenden Ansprüche, umfassend eine Verteilungswand (63) der Vielzahl von Leitwänden, die sich von stromaufwärts nach stromabwärts innerhalb des primären Ausbreitungspfads (Kp) erstreckt, indem sie sich der Konzentratorwand (28) annähert, um die primäre Strömung (Vp) in zwei Strahlen (Vpl, Vp2) aufzuteilen, die jeweils auf den konkaven Teil der Schaufeln (6) des Rotors auf Höhe des primären Eintrittssektors ausgerichtet sind.

7. Luftturbine nach Anspruch 1, wobei die Schaufeln (6) dünne Blätter mit einer identischen Struktur in Form eines zylindrischen Oberflächenabschnitts und einer Anzahl von vierzehn bis sechsundzwanzig und vorzugsweise einer Anzahl von zwanzig sind.

8. Luftturbine nach Anspruch 7, wobei jede Schaufel (6) einen Krümmungsradius mit einem Wert zwischen dem 0,05- bis 0,3-Fachen des Durchmessers (D) des Rotors und vorzugsweise gleich dem 0,146-Fachen des Durchmessers (D) des Rotors aufweist.

9. Luftturbine nach Anspruch 1, umfassend ein Statorelement (41), das integral im Rotor (2) untergebracht und beweglich am Rahmen (3) montiert ist, um zwischen einer offenen Position, in der es einen Durchgang des Luftstroms durch den Rotor (2) ermöglicht, und einer geschlossenen Position, in der es den Luftdurchgang durch den Rotor (2) blockiert, bewegbar zu sein.

10. Luftturbine nach Anspruch 9, wobei das Statorelement (41) zwei Leitmodule (42) umfasst, die in Bezug auf die Drehachse des Rotors (2) diametral einander zugewandt sind, wobei jedes Leitmodul (42) durch eine äußere Führungsfläche (42a) und eine innere Führungsfläche (42b) begrenzt ist, wobei
jede äußere Führungsfläche (42a) zur Außenseite des Rotors hin ausgerichtet ist und eine ihrer äußeren Führungsflächen (42a) sich in der Verlängerung des primären Eintrittssektors (Xa) in der geschlossenen Position des Statorelements erstreckt, und
die inneren Führungsflächen (42b) der beiden Module gemeinsam einen Korridor (43) innerhalb des Rotors (2) begrenzen, wobei dieser Korridor sich in der Verlängerung des primären Eintrittssektors (Xa) in der offenen Position des Statorelements erstreckt.

11. Elektrizitätswindgenerator, umfassend eine Luftturbine (1) nach einem der vorhergehenden Ansprüche und einen Wandler des Drehmoments des Rotors (2) in elektrische Energie.

## Claims

1. An aeraulic turbine (1) with through-flow, intended to be installed on a support wall (14) to be exposed to a wind (V) circulating from upstream (AM) to downstream (AV) according to a direction having a component in a longitudinal direction (AX) of this turbine (1), this longitudinal direction being parallel to the support wall (14), this turbine comprising:
- a squirrel cage-type rotor (2) including arcuate vanes (6) having a concave portion and a convex portion;
- a frame (B) carrying the rotor (2), the latter being able to rotate about a transverse axis (AY) parallel to the support wall (14) and perpendicular to the longitudinal direction (AX), this rotor having an upstream peripheral half and a downstream half separated from each other by a median line (M) passing through the transverse axis and with a direction perpendicular to the longitudinal (AX) and transverse (AY) directions; and
- a plurality of wind guide walls carried by the frame, these guide walls delimiting within the turbine:
- a wind primary intake rotor sector (Xa),
- a primary propagation flow path (Kp) adapted to guide from upstream (AM) to downstream (AV) a primary flow (Vp) of the wind (V) meeting the turbine up to the primary intake sector to supply it, this wind primary flow path being delimited by a first deflector wall (19; 52) and a concentrator wall (28) of the plurality of wind guide walls, the concentrator wall (28) extending from upstream to downstream while approaching the support wall (14) from an upstream boundary (29) to a downstream boundary (31) located at the periphery of the rotor (2), the first deflector wall (19; 52) departing away from the support wall (14) from upstream to downstream from an upstream end (24; 53) up to an intake end (26; 54) located at the periphery of the rotor to protect a portion of the upstream peripheral half of the rotor (2) from wind (V),
- a wind ejection rotor sector (Xf) which is open onto a discharge space (E);
- a wind auxiliary intake rotor sector (Xb) extending angularly with respect to the transverse axis (AY) between the primary intake sector (Xa) and the ejection sector (Xf), this rotor sector being located at the portion protected from the wind (V) by the deflector surface (19; 52);
- a scoop (37), separated from the primary propagation flow path (Kp) by at least one of the plurality of guide walls, which is adapted to guide from upstream (AM) to downstream (AV) an auxiliary flow (Vk) of the wind (V) up to the auxiliary intake sector (Xb) to supply it,
**characterised in that** the turbine comprises a secondary propagation flow path (Ks), separated from the primary propagation flow path (Kp) by at least one of the plurality of guide walls, which is adapted to guide from upstream (AM) to downstream (AV) a secondary flow (Vs) of the wind (V) meeting the turbine, this secondary propagation flow path (Ks) extending according to the longitudinal direction (AX) by bypassing the rotor (2) and opening into the discharge space (E), proximate to the ejection sector (Xf);
the scoop (37) extending from upstream (AM) to downstream (AV) from a draw opening (38) which is open onto the secondary propagation flow path (Ks);
the secondary propagation flow path (Ks) forming a convergent amplification channel (32) downstream of the draw opening (38) up to the discharge space (E).

2. The aeraulic turbine according to claim 1, wherein:
- the scoop (37) is delimited by the first deflector wall (52) and a second deflector wall (56) which extends downstream of the first deflector wall (52) while departing away from the support wall (14) from upstream to downstream from an upstream end (58) up to a downstream end (59) located at the periphery of the rotor;
- the convergent amplification channel (32) is delimited by a base (33), rigidly mounted to the frame (3) or fastened to the support wall (14), and by a closure wall (57) which extends the upstream end of the second deflector wall (56) downstream,
wherein the base (33) extends at a distance from the closure wall (57) while forming a boss directed towards this closure wall (57).

3. The aeraulic turbine according to claim 1 or 2, wherein:
- the upstream boundary (29) of the concentrator wall (28) and the upstream end (53) of the first deflector wall (52) jointly delimit upstream of the turbine a primary intake field (Xp) which extends longitudinally in alignment with the primary propagation flow path (Kp);
- the upstream end (53) of the first deflector wall (52) and the support wall (14) jointly delimit upstream of the turbine a secondary intake field (Xs) which extends longitudinally in alignment with the secondary propagation flow path (Ks);
- a deflection wall (61), of the plurality of guide walls, overlaps the primary and secondary intake fields (Xp, Xs) by extending from upstream (AM) to downstream (AV) while approaching the support wall (14), so as to be able to draw a bypass flow (Vh) of the wind (V) circulating in the primary intake field (Xp) and guide it towards the secondary propagation flow path (Ks), the primary flow (Vp) corresponding to an amount of wind extending into the primary intake field which is removed off the bypass flow (Vh) along the deflection wall (61), whereas the secondary flow (Vs) corresponds to an amount of wind extending into the secondary intake field (Xs) enriched with the bypass flow (Vh).

4. The aeraulic turbine according to claims 1 or 2, comprising a separation wall (62), of the plurality of guide walls, which extends along the scoop (37), between the first and second deflector walls (52, 56), to delimit a first scoop passage and a second scoop passage each intended to guide a respective portion (Vkl, Vk2) of the auxiliary flow (Vk) towards the concave portion of the vanes (6) at the rotor auxiliary intake sector (Xb), the first scoop passage being delimited by the first deflector wall (52) and the separation wall (62), and the second scoop passage being delimited by this separation wall (62) and the second deflector wall (56).

5. The aeraulic turbine according to claim 3, combined with claim 4, wherein:
- the separation wall (62) protrudes from the scoop (37) within the secondary propagation flow path (Ks) throughout the draw opening (38);
- the deflection wall (61) extends within the secondary propagation flow path (Ks) between the first deflector wall (52) and the separation wall (62) so that the bypass flow (Vh) is guided towards the first scoop channel to enrich the corresponding portion (Vk1) of the auxiliary flow (Vk).

6. The aeraulic turbine according to one of the preceding claims, comprising a distribution wall (63), of the plurality of guide walls, which extends from upstream to downstream within the primary propagation flow path (Kp) while approaching the concentrator wall (28) to split the primary flow (Vp) into two jets (Vpl, Vp2) each oriented towards the concave portion of the vanes (6) of the rotor at the primary intake sector.

7. The aeraulic turbine according to claim 1, wherein the vanes (6) are thin blades having an identical structure in the form of a cylindrical surface portion, fourteen to twentysix in number, and preferably twenty in number.

8. The aeraulic turbine according to claim 7, wherein each vane (6) has a radius of curvature with a value comprised between 0.05 and 0.3 times the diameter (D) of the rotor, and preferably equal to 0.146 times the diameter (D) of the rotor.

9. The aeraulic turbine according to claim 1, comprising a stator member (41) completely accommodated in the rotor (2) and movably mounted on the frame (3) so as to be movable between an open position in which it enables a passage of the air flow throughout the rotor (2) and a closed position in which it blocks the passage of air throughout the rotor (2).

10. The aeraulic turbine according to claim 9, wherein the stator member (41) comprises two guide modules (42) diametrically opposite each other with respect to the axis of rotation of the rotor (2), each guide module (42) being delimited by an outer guide surface (42a) and an inner guide surface (42b), with
each outer guide surface (42a) being oriented towards the outside of the rotor and wherein one of its outer guide surfaces (42a) extends in the extension of the primary intake sector (Xa) in the closed position of the stator member, and
the inner guide surfaces (42b) of the two modules jointly delimiting a corridor (43) within the rotor (2), this corridor extending in the extension of the primary intake sector (Xa) in the open position of the stator member.

11. A wind electric power generator comprising an aeraulic turbine (1) according to one of the preceding claims and a converter of the rotational torque of the rotor (2) into electrical energy.
